# EUROPEAN PATENT APPLICATION

(11) **EP 2 244 020 A2**
(43) Date of publication of application: **27.10.2010**
(21) Application number: 10003963.5
(22) Date of filing: 15.04.2010
(51) Int. Cl.: F24D 12/02, F24D 17/00

(54) **Device and method for providing heated water at a draw-off point**

(30) Priority: 16.04.2009 NL 1036866
(71) Applicant: Quantex Group B.V., 6831 AJ Arnhem (NL)
(72) Inventor: Kort, Ronald André, 7313 HG Apeldoorn (NL)
(74) Representative: Baeten, Ernest

(57) **Abstract**

The present invention relates to a device for supplying hot water to a draw-off point, the device comprising a central water heater, at least one draw-off point, a hot water supply line, which extends from said central water heater to said at least one draw-off point, and a local water heater, which is incorporated in the hot water supply line near said at least one draw-off point, **characterised in that** detection means are provided for detecting the temperature and/or a temperature increase of the water upstream of and near the other local water heater so as to make it possible to control the supply of water to the draw-off point. The invention further relates to method for supplying hot water from a central water heater to a draw-off point via a hot water supply line provided with a local water heater and to a method for adapting an existing hot water supply line.

## Description

### DESCRIPTION

The present invention, according to a first aspect thereof, relates to a device for supplying hot water to a draw-off point, the device comprising a central water heater, at least one draw-off point, a hot water supply line, which extends from said central water heater to said at least one draw-off point, and a local water heater, which is incorporated in the hot water supply line near said at least one draw-off point.

The known device comprises a combination boiler with water conduits from the combination boiler to a number of faucets, among which a kitchen faucet. When the kitchen faucet is operated for drawing hot water, water flows from the combination boiler, where it has been heated, into a hot water supply line from the combination boiler to the kitchen faucet. Because the water must flow through the entire hot water supply line, it takes some time before hot water reaches the kitchen faucet. When the kitchen faucet is subsequently turned off, the hot water supply line is filled with hot water, which subsequently cools down. Water and energy are wasted in said known device. During an initial phase, the kitchen faucet is open until the hot water from the combination boiler reaches the kitchen faucet. Water that flows from the kitchen faucet during said initial phase usually goes unused. After the faucet has been turned off, the water in the hot water supply line cools down. Frequently the amount of water in the hot water supply line is larger than the amount of hot water that is tapped in one draw-off. Moreover, the heated water gives off heat to the hot water supply line during the initial phase, as a result of which it takes even longer before the water at the kitchen faucet has the desired temperature. To reduce the amount of time that passes between the opening of the hot water faucet and the moment hot water is available, it is known to install a relatively small local water heater functioning as a so-called combination heater near the faucet, so that only a very short supply pipe from the local water heater to the kitchen faucet is needed. Another known solution is to install a so-called instant water heater in the hot water supply line near the kitchen faucet, which water heater heats water in the hot water supply line when the hot water tap is open. The term "instant water heater" is generally, and also in the present document, therefore, understood to mean a heating device designed to heat up water flowing through the instant water heater from the ambient temperature to the desired hot water temperature. A drawback of the provision of an additional local water heater is the fact that it must constantly keep water at a high temperature and that only a limited amount of hot water is available, because the local water heater is intended for placement in a kitchen cabinet. A drawback of the instant water heater is that the heating capacity must be relatively large for heating the amount of water that flows through the water heater to the desired high temperature in the corresponding short period of time.

Accordingly it is an object of the present invention to provide a solution to the aforesaid drawbacks of the prior art, at least to provide a device which makes it possible to make hot water available relatively quickly and by means of which wastage or at least unnecessary use of energy and/or water can be reduced in comparison with the aforesaid devices. This object is accomplished by the invention in that detection means are provided for detecting the temperature and/or a temperature increase of the water upstream of and near the other local water heater so as to make it possible to control the supply of water to the draw-off point. The detection means provide a possibility to control the supply of water from the hot water supply line to the draw-off point in dependence on the temperature and/or the temperature increase detected by the detection means in different ways. Based on the present invention, this can take place in various ways, a few of which will be explained in more detail hereinafter. The invention is based on the principle that the most advantageous (combined) method of heating water possible is used with each draw-off, depending on the duration of said draw-off. The device according to the invention makes it possible to lead water through the hot water supply line to said at least one draw-off point in different ways, depending on the detected temperature or temperature increase. One possible way is as follows: when hot water is demanded at the draw-off point, the hot water supply line is filled with hot water from the central water heater. The water already present in the hot water supply line prior to the draw-off point being operated is carried to the draw-off point via the local water heater, which heats the water passing therethrough. Upon detection of a temperature or temperature increase that indicates that water just heated by the central water heater, or at least hot water, arrives in the inlet pipe to the local water heater, the local water heater will turn off and the water is sent to the draw-off point, possibly via the bypass, without the already hot water being heated by the local water heater again. When hot water is tapped at the at least one draw-off point for a prolonged period of time, i.e. a period of time longer than it takes to fill the hot water supply line with hot water, use is thus made of the relatively more efficient central water heater for supplying hot water after the initial period. When hot water is tapped for a relatively short period of time, i.e. a period of time shorter than the initial period, there is no need to fill the entire hot water supply line from the central water heater to the draw-off point with hot water. The object aimed at by the invention is thus accomplished. The detection means may also be designed to detect a temperature decrease, on the basis of which detection the system can be reset.

From US 2006/054217 there is known a device for supplying water to a draw-off point in which a by-pass to a so-called instant hot water supply is incorporated in the hot water supply line. The instant hot water supply comprises a reservoir with a hot fluid, through which a water pipe extends. The fluid in the reservoir is kept at a high temperature, similarly to water in a water heater. Water present in the pipe extending through the fluid reservoir is kept at an elevated temperature through heat exchange. The object of the instant water supply is thus to keep hot water at an elevated temperature rather than to quickly heat the water, as is done in a water heater. After all, when the water in the hot water pipe of the instant hot water supply runs out before hot water from a main heater reaches a mixing point of the hot water pipe and the hot water supply line, this will result in a temperature decrease of the "hot" water at the draw-off point. Moreover, such a device exhibits the same problem as the problem of the boiler discussed in the introduction, which problem is solved by the present invention, viz. the fact that fluid in a reservoir must continuously be kept at an elevated temperature.

The detection means preferably comprise a heat sensor and/or a temperature sensor by means of which the temperature or a temperature increase of the water can be detected. On the basis of a value measured by such a sensor, subsequent actions may be started.

It is preferable in that case if transmission means are provided for transmitting a signal corresponding to a temperature and/or a temperature increase detected by the sensor. Thus a control device or an operating device can be controlled on the basis of the transmitted signal. It would also be possible, however, for a sensor to be incorporated in the operating device.

In a preferred embodiment of the present invention, switching means are provided for turning the local water heater on and off. The switching means may be designed to respond to a signal transmitted by the transmission means. Thus the local water heater can be turned off by the switching means on the basis of a detected temperature and/or a temperature increase. This in order to prevent the local water heater remaining activated when hot water from the central water heater flows through the local water heater, which would lead to an energy loss.

Alternatively, a bypass around the local water heater is provided in the hot water supply line, with water being passed through or around the local water heater by guide means designed to respond to a detection made by the detection means. Also in this case the local water heater will be turned off when hot water from the central water heater has reached a point near the local water heater, because the water will be passed around the local water heater upon detection of a predetermined temperature or temperature increase.

It is preferable in that regard if the hot water supply line and the bypass converge into a single supply line to said at least one draw-off point. As a result, only one pipe needs to extend to the inlet of the draw-off point for the water and one connection to the hot water tap will suffice.

The guide means for passing water through or around the local water heater preferably comprise at least one valve. Said at least one valve may comprise a three-way valve which causes water from the central water heater to pass through and/or around the local water heater. Insufficiently heated water can be passed partially through and partially around the local water heater. Said at least one valve may also comprise two-way valves which open or close the supply of water through the water heater or through the bypass, as the case may be. Likewise, one or more valves may be provided at a point where the bypass and the hot water supply line converge.

The central water heater may comprise a combination boiler, but also another hot water device, for example a hot water boiler.

In a preferred embodiment of the present invention, the local water heater comprises a through-flow heater. Using a through-flow heater, a small amount of water can be quickly heated in a simple manner. The local water heater may be of a different type, for example a hot water boiler having a comparatively small water volume.

The water heater is preferably an instant water heater. An instant water heater directly heats water to the desired temperature the instant the water flows through the instant water heater.

The invention, according to a second aspect thereof, relates to a method for supplying hot water from a central water heater to a draw-off point via a hot water supply line provided with a local water heater, wherein the temperature or a temperature increase of the water in the hot water supply line upstream of and near the local water heater is measured and said water is or is not heated by the local water heater in dependence on the result of the measurement. The problem solved by such a method is the same as the problem and the solution as discussed with regard to the first aspect of the present invention. In this case, too, the principle applies that an advantageous (combination of) ways of providing hot water can be realised when tapping hot water.

It is preferable in that regard if the hot water supply line is provided with a bypass around the local water heater and if the water is passed to the draw-off point through the local water heater or around the local water heater in dependence on the result of the measurement. The local heater may comprise a through-flow heater.

Alternatively it is preferable if the water flows through the local water heater, which local water heater is turned on or off in dependence on the result of the measurement. A sensor may be provided for detecting the temperature and/or temperature increase of the water in the hot water supply line upstream of and near the local water heater. The sensor could influence the switching action in question in that case.

The present invention, according to a third aspect thereof, relates to a method for adapting a device for supplying hot water to a draw-off point, said device comprising a central water heater, at least one draw-off point and a hot water supply line extending from the central water heater to said at least one draw-off point, whilst a sensor is provided for measuring the temperature and/or a temperature increase of the water in the hot water supply line for the purpose of having a local water heater heat or not heat water flowing through the hot water supply line in dependence on the measurement made by the sensor. If the hot water supply line is already provided with a local water heater, the method may comprise the provision of a sensor and a switching device for connecting the local water heater, either directly or by diverting the water, in dependence on the detection made by the sensor.

The present invention will now be explained in more detail on the basis of a description of exemplary embodiments of the invention, in which reference is made to the appended figures, in which:
Figure 1 is a simplified schematic view of a bypass system in a house;
Figures. 2a and 2b are views showing the detail I of figure 1 in two different situations; and
Figure 3 shows an alternative embodiment of the detail I of figure 1.

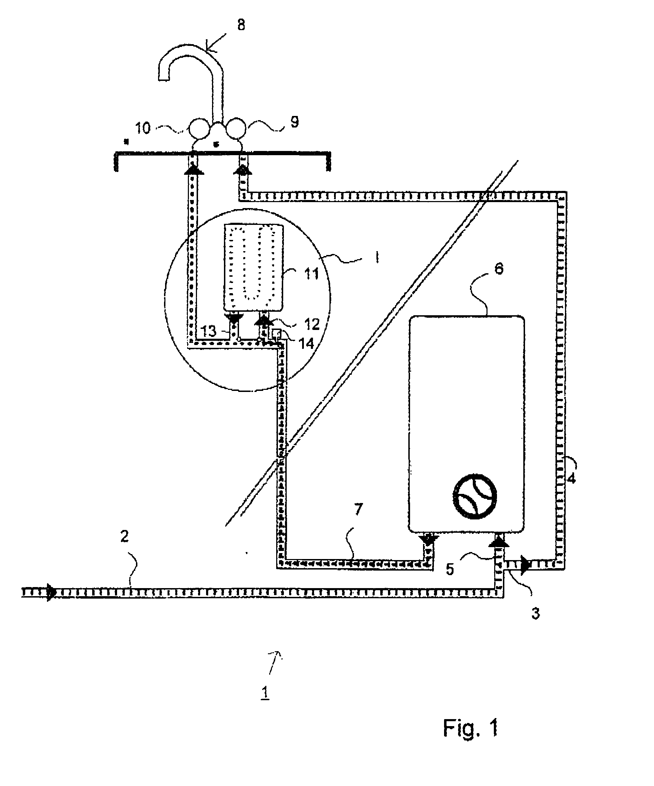

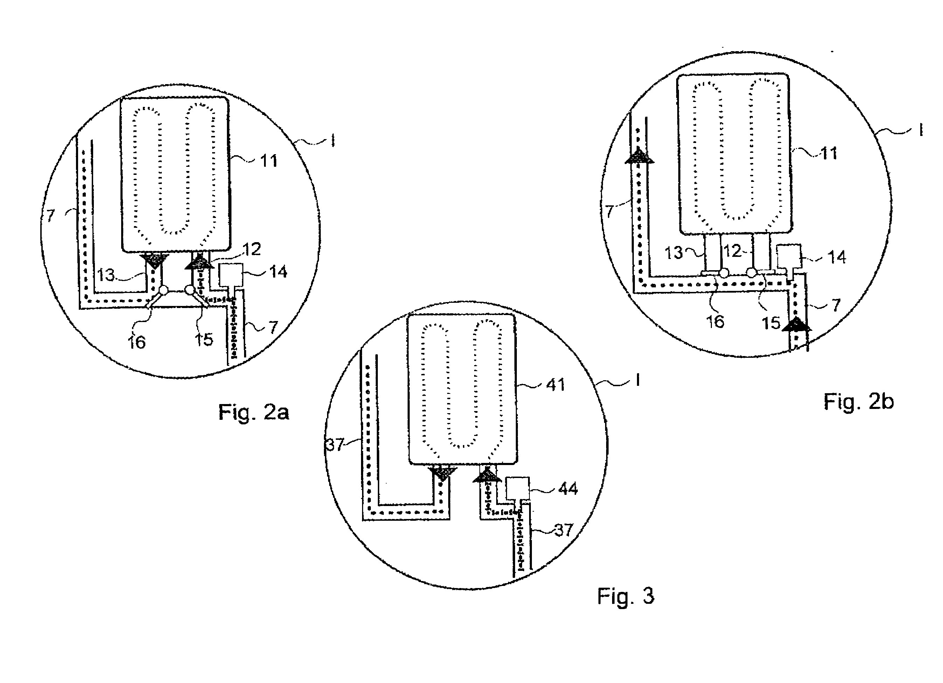

Figure 1 is a strongly simplified view of an exemplary embodiment of a water supply system 1 for a house, comprising a main water pipe 2 with a branch 3 to a cold water supply pipe 4 and a supply pipe 5 for a combination boiler 6. The cold water supply pipe 4 leads to a kitchen faucet 8 comprising a cold water tap 9 and a hot water tap 10. The hot water supply line 7 also leads to the kitchen faucet 8. Near the kitchen faucet 8, an instant water heater 11 is incorporated in the hot water supply line 7 via a bypass, parallel to another part of the hot water supply line 7, via an inlet pipe 12 and an outlet pipe 13. A sensor 14 is provided in the hot water supply line 7. The parallel connection of the parts of the hot water supply line 7 with and without the instant water heater, indicated at I, is shown and explained in more detail in variants in figures 2a, 2b and 3.
Figure 2a is a more detailed view of part I of figure 1 with the hot water supply line 7, the instant water heater 11, the inlet pipe 12, the outlet pipe 13 and the sensor 14. Furthermore, two three-way valves 15, 16 are provided.
Figure 3 is a more detailed view of an alternative embodiment of part I of figure 1. Elements which are comparable to elements shown in figures 2a and 2b are indicated by the same numerals incremented by 30.

With reference now to figure 1, there is shown a schematic and strongly simplified view of a water supply system 1 of a house. Water is led into the house (not shown) via a main water pipe 2, which pipe branches off at a branch point into a cold water supply pipe 4 to the kitchen faucet 8 and a supply pipe 5 for the combination boiler. When the cold water tap 9 of the kitchen faucet 8 is opened, water will flow directly from the main water pipe 2, via the cold water supply pipe 4, to the kitchen faucet 8 until the cold water tap 9 is closed. When the hot water tap 10 is opened, water will flow from the main water pipe 2 to the combination boiler 6, which will heat the water in a manner which is known per se and carry it towards the kitchen faucet 8 via the hot water supply line 7. When the hot water tap 10 is opened, also the instant water heater 11, which is for example disposed in a kitchen cabinet under the kitchen faucet 8, is likewise activated. The sensor 14, in this case a temperature sensor, measures the temperature of the water in the hot water supply line 7 directly upstream of the inlet pipe 12. Figure 2a shows in more detail the situation of the hot water supply line near the instant water heater 11 directly after the opening of the hot water tap 10 of the kitchen faucet 8. When no hot water has been tapped from the kitchen faucet 8 for some time, the water in the hot water supply line 7 will have cooled down, for example to the ambient temperature, when the hot water tap 10 is opened. Consequently, the temperature of the water at the temperature sensor 14 will initially remain relatively low, until the water present in the supply line 7 has been displaced from the hot water supply line 7 shortly therebefore by water heated by means of the combination boiler 6. For the time being the sensor 14 will send a signal to the three-way valve 5 via the supply pipe 7, in a manner which will be known to those skilled in the art, to have water from the hot water supply line 7 flow through the instant water heater 11. The cold water supplied from the hot water supply line 7 is heated by the instant water heater 11 and carried to the kitchen faucet 8 via the outlet pipe 13 and the hot water supply line 7. A user who opens the hot water tap 10 will therefore draw cold water for only a relatively short period of time, i.e. the time it takes for the hot water supply line 7 between the outlet pipe 13 and the kitchen faucet 8 to drain, after which the water heated by the instant water heater 11 will flow from the kitchen faucet 8. When the sensor 14 detects, by measuring the temperature or a temperature increase of the water, that hot water from the combination boiler 6 has reached the sensor in the hot water supply line 7, the sensor 14 will send a signal to the three-way valve 15, in a manner which is known per se, to shut off the inlet pipe 12, so that the hot water from the supply line 7 will flow directly to the kitchen faucet 8, i.e. not via the instant water heater 11. In response to the increase in the water pressure in the hot water supply line 7 and the decrease in the water pressure in the outlet pipe 13, the three-way valve 16 will shut off the outlet pipe 13 to enable a good flow through the hot water supply line 7. This situation is shown in figure 2b. When the inlet pipe 12 is shut off, also the instant water heater 11 is shut off. Consequently, a user will be provided with hot water from the instant water heater 11 relatively quickly after opening the hot water tap 10. Once hot water from the combination boiler has reached the sensor 14 (the bypass 12, 11, 13), hot water from the combination boiler 6 will be carried to the kitchen faucet 8. A user will thus receive hot water from a relatively high-energy instant water heater 11 within a short time. When the hot water from the combination boiler 6 reaches the bypass, however, the kitchen faucet 8 will be provided with water that has been heated by the relatively low-energy combination boiler 6.

An alternative embodiment of the detail I is shown in figure 3, in which the instant water heater 41 is permanently incorporated in a main pipe of the hot water supply line 37 and in which the sensor 44 turns off the instant water heater 41 upon detection of a predetermined temperature or temperature increase. The water thus flows through the instant water heater 41, but said heater does not (additionally) heat the water that has already been heated by the combination boiler 6. After the hot water tap has been closed, the situation as described at the beginning, before the hot water tap was opened, will be restored at some point. This can be initiated by the closing of the hot water tap, by a sensor which detects the temperature or the temperature decrease, by the lapsing of a period of time, or by an alternative method.

Only a few exemplary embodiments of the device according to the present invention have been shown and described in the figures and the above description. It will be understood that many variants, which may or may not be obvious to those skilled in the art, are possible within the scope of the present invention, which is defined in the appended claims. Thus, a kitchen boiler may be used instead of the instant water heater. Furthermore, several local water heaters may be incorporated in a water supply system, of course, for example also at a bathroom faucet and a hot water faucet that may be present at a dressing table in a bedroom. The adaptation of an existing water supply system can take place by the installation of a suitable sensor and a switch controlled by said sensor for turning an instant water heater on and off. If an instant water heater is not provided in the water supply system yet, a bypass with an instant water heater or a hot water boiler may be provided.

## Claims

1. A device for supplying hot water to a draw-off point, the device comprising a central water heater, at least one draw-off point, a hot water supply line, which extends from said central water heater to said at least one draw-off point, and a local water heater, which is incorporated in the hot water supply line near said at least one draw-off point, **characterised in that** detection means are provided for detecting the temperature and/or a temperature increase of the water upstream of and near the other local water heater so as to make it possible to control the supply of water to the draw-off point.

2. A device according to claim 1, **characterised in that** the detection means comprise a heat sensor and/or a temperature sensor.

3. A device according to claim 2, **characterised in that** transmission means are provided for transmitting a signal corresponding to a temperature and/or a temperature increase detected by the sensor.

4. A device according to claim 3, **characterised in that** switching means are provided for turning the local water heater on and off, and **in that** said switching means are designed to respond to a signal transmitted by the transmission means.

5. A device according to one or more of the preceding claims, **characterised in that** a bypass around the local water heater is provided in the hot water supply line, with water being passed through or around the local water heater by guide means designed to respond to a detection made by the detection means.

6. A device according to claim 5, **characterised in that** the hot water supply line and the bypass converge into a single supply line to said at least one draw-off point.

7. A device according to claim 5 or 6, **characterised in that** said guide means comprise at least one valve.

8. A device according to one or more of the preceding claims, **characterised in that** the central water heater comprises a combination boiler.

9. A device according to one or more of the preceding claims, **characterised in that** the local water heater comprises a through-flow heater.

10. A device according to one or more of the preceding claims, **characterised in that** the water heater is an instant water heater.

11. A method for supplying hot water from a central water heater to a draw-off point via a hot water supply line provided with a local water heater, **characterised in that** the temperature or a temperature increase of the water in the hot water supply line upstream of and near the local water heater is measured and said water is or is not heated by the local water heater in dependence on the result of the measurement.

12. A method according to claim 11, **characterised in that** the hot water supply line is provided with a bypass around the local water heater and that the water is passed to the draw-off point through the local water heater or around the local water heater in dependence on the result of the measurement.

13. A method according to claim 11, **characterised in that** the water flows through the local water heater, which local water heater is turned on or off in dependence on the result of the measurement.

14. A method for adapting a device for supplying hot water to a draw-off point, said device comprising a central water heater, at least one draw-off point and a hot water supply line extending from the central water heater to said at least one draw-off point, **characterised in that** a sensor is provided for measuring the temperature and/or a temperature increase of the water in the hot water supply line for the purpose of having a local water heater heat or not heat water flowing through the hot water supply line in dependence on the measurement made by the sensor.
